# EUROPÄISCHE PATENTSCHRIFT

(11) **EP 0 945 401 B1**
(45) Veröffentlichungstag und Bekanntmachung des Hinweises auf die Patenterteilung: **06.02.2002**
(21) Anmeldenummer: 99104844.8
(22) Anmeldetag: 11.03.1999
(51) Int. Cl.: C01B 21/14

(54) **Verfahren zur Herstellung von Hydroxylammoniumsulfat**
Process for the preparation of hydroxylammonium sulfate
Procédé de production de sulfate d'hydroxylammonium

(30) Priorität: 21.03.1998 DE 19812508
(43) Veröffentlichungstag der Anmeldung: 29.09.1999
(73) Patentinhaber: Domo Caproleuna GmbH, 06234 Leuna (DE)
(72) Erfinder: Kretschmar, Manfred, 06122 Halle (DE); Leetsch, Norbert, 06237 Leuna (DE)
(74) Vertreter: Schinke, Herbert, Dr. Dr.,

(56) Entgegenhaltungen:
- DE-A- 2 037 611
- DATABASE WPI Section Ch, Week 199624 Derwent Publications Ltd., London, GB; Class A41, AN 1996-237810 XP002125502 & RU 2 045 471 C (UKR NITROGEN IND ORG SYNTH PRODUCTS INST), 10. Oktober 1995 (1995-10-10)
- DATABASE WPI Section Ch, Week 199613 Derwent Publications Ltd., London, GB; Class E36, AN 1996-127559 XP002125503 & RU 2 039 006 C (UKR NITROGEN ORG SYNTH PRODUCTS INST), 9. Juli 1995 (1995-07-09)

## Beschreibung

Die Erfindung betrifft ein verbessertes Verfahren zur Herstellung von Hydroxylammoniumsulfat. Damit werden eine höhere Betriebssicherheit und eine abproduktfreie Technologie erreicht.

Für die Herstellung von Hydroxylammoniumsulfat (HAS) wird konzentriertes Stickstoffmonoxid benötigt, das durch die Oxidation von Ammoniak gewonnen wird.

Bekannt ist ein Verfahren zur Herstellung von Hydroxylammoniumsulfat, das die Aufbereitung des Reaktionsgemisches von Ammoniak, Sauerstoff und Wasserdampf, die katalytische Oxidation von Ammoniak, die Mischung des Nitrosegases mit Wasserstoff, das Stabilisieren der Zusammensetzung des Nitrosegases, die Abscheidung von konzentriertem Stickstoffmonoxid, die Reinigung des Stickstoffmonoxides vom Stickstoffdioxid, die Desorption des salpetersauren Kondensates, die Mischung von Stickstoffmonoxid mit Wasserstoff sowie Schwefelsäure mit Wasser und die anschließende Synthese des Hydroxylammoniumsulfates umfaßt. Dieses Verfahren ist in technologischer Sicht unkompliziert, da jede Stufe separat gesteuert wird.

Andererseits sind bei seiner Anwendung Rohstoffverluste unvermeidlich, weil Materialverluste in Form von 1 %iger Salpetersäurelösung entstehen.

Aussichtsreicher ist das Verfahren zur Herstellung von Hydroxylammoniumsulfat, dessen Unterschied vom o. g. Verfahren darin besteht, daß die Stickoxidkonzentrierung in zwei Stufen durchgeführt wird. In der ersten Stufe wird ein größerer Teil des Kondensates mit einem Salpetersäuregehalt von bis zu 0,3 Masse-% abgeschieden, das Rücklaufkondensat wird mit der Kondensationswärme erwärmt. In der zweiten Stufe wird das Kondensat mit bis zu 5 bis 6 Masse-% Salpetersäure unter gleichzeitiger Desorption der Stickoxide aus der Rücklaufflüssigkeit abgeschieden. Das genannte Kondensat wird einer Wiedergewinnungsrektifikation mit Abscheidung von Sekundärdampf und 40 bis 45%iger Salpetersäure unterzogen. Die Säuredämpfe werden während der Stabilisierung der Nitrosegaszusammensetzung zusätzlich hydriert. Ein Teil des Kondensates der ersten Stufe mit einem Salpetersäuregehalt bis zu 0,3 Masse-% wird bei der Mischung von Schwefelsäure mit Wasser verwendet. In das technologische Schema des Prozesses wurden zusätzlich ein Rückgewinnungskondensator, ein Überhitzer des Dampf-Sauerstoff-Gemisches, eine Sättigungs- und Rektifikationskolonne eingeführt (RU 2045471).

Dieses Verfahren zur HAS-Herstellung ermöglicht die Verwertung der verdünnten Salpetersäurelösungen durch Einführung zusätzlicher Prozeßstufen. Andererseits wurde das Verfahren in Folge der starken Wechselbeziehungen dieser Stufen komplizierter in der Steuerung und störungsanfälliger im Betrieb.

Aufgabe der vorliegenden Erfindung war es daher, ein verbessertes Verfahren zur HAS-Herstellung durch eine Änderung der Prozeßtechnologie zu entwickeln, so daß diese vereinfacht und dadurch die Betriebssicherheit unter Gewährleistung einer abproduktfreien Technologie erhöht wurde.

Demgemäß wurde ein Verfahren zur Herstellung von Hydroxylammoniumsulfat durch
- Aufbereitung des Reaktionsgemisches aus Ammoniak, Sauerstoff und Wasserdampf,
- katalytische Ammoniakoxidation,
- Mischung der erzeugten Nitrosegase mit Wasserstoff,
- Stabilisieren der Zusammensetzung der Nitrosegase durch Hydrieren,
- zweistufige Konzentrierung durch Wasserdampfkondensation,
- Reinigung der Nitrosegase aus der zweiten Stufe durch Kondensation von Stickstoffdioxid in Wasser zu verdünnter Salpetersäure,
- Mischung dieser gereinigten Nitrosegase mit Wasserstoff,
- Mischung mit dem Gemisch aus Schwefelsäure, Wasser und dem salpetersauren Konzentrat der ersten Stufe der NO-Konzentrierung und
- die eigentliche Synthese des Hydroxylammoniumsulfates entwickelt, bei dem
- das aus der Reinigung der zweiten Stufe der Konzentrierung ausgeschiedene Kondensat, dessen Salpetersäureanteil mehr als 2 Masse-% beträgt,
- der Flüssigphasenhydrierung mit Wasserstoff in einem Reaktor mit PlatinKatalysator unterzogen und
- dieses Gemisch aus Nitrosegasen und Wasserstoff mit dem Hauptstrom der Mischung aus gereinigten Nitrosegasen und Wasserstoff vereinigt wird.

Besonders vorteilhaft ist es, wenn das Hydrierprodukt der Flüssigphasenhydrierung, dessen Salpetersäureanteil bis zu 0,45 Masse-% beträgt, bei der Mischung des salpetersauren Kondensates der ersten Stufe mit Schwefelsäure und Wasser mit verwendet wird.

Als Platinkatalysator sind die an sich bekannten Katalysatoren zur Gewinnung von Stickstoffmonoxid durch Reduktion von Salpetersäure geeignet, beispielsweise aus Platinoxid und Platinsulfid auf einem Graphitträger (RU 2039006), aber auch Weiterentwicklungen und Modifizierungen dieses Typs.

Der Vorteil des erfindungsgemäßen Verfahrens besteht darin, daß das Hydrierprodukt aus der Flüssigphasenhydrierung des Kondensates der zweiten Stufe der Nitrosegaskonzentrierung am Platinkatalysator zur Schwefelsäureverdünnung und das Stickstoffmonoxid nach Vereinigung mit dem Hauptstrom der Mischung der nitrosen Gase mit Wasserstoff sofort zur HAS-Synthese abgeleitet wird, was die Technologie des bekannten Prozesses vereinfacht, die Betriebssicherheit erhöht, und damit gleichzeitig eine abproduktfreie Technologie der HAS-Herstellung erreicht wird.

Außerdem ermöglicht dieses Verfahren durch die Flüssigphasenhydrierung des Kondensates der zweiten Stufe, verdünnte wäßrige Lösungen der Salpetersäure und Abprodukte anderer Produktionen zu verwerten und damit die Rohstoffbasis der HAS-Herstellung zu erweitem.

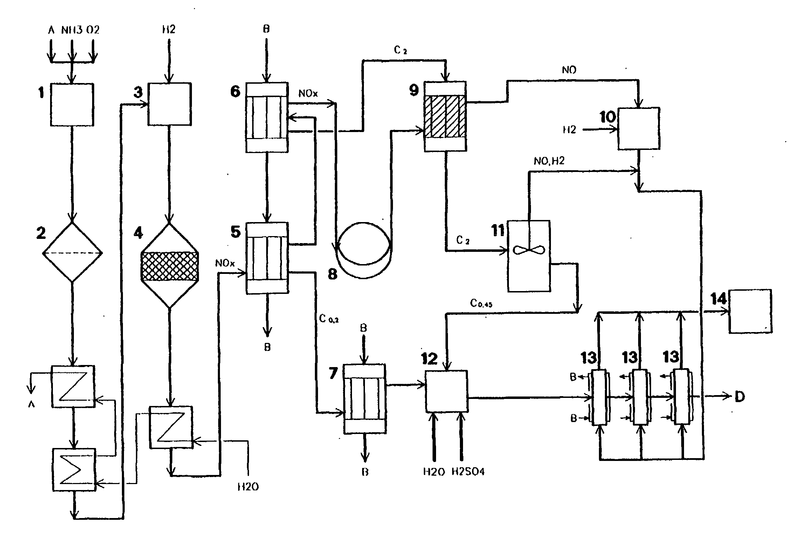

Abb. 1 stellt das technologische Schema zur Herstellung von Hydroxylammoniumsulfat dar. Darin bedeuten:
- 1: Mischer
- 2: Reaktor
- 3: Mischer
- 4: Reaktor
- 5: Kondensator der ersten Stufe
- 6: Kondensator der zweiten Stufe
- 7: Kühler
- 8: Verdichter
- 9: Absorber
- 10: Mischer
- 11: Reaktor
- 12: Mischer
- 13: Reaktorkaskade
- 14: Verbrennung
- A: Wasserdampf
- B: Kühlwasser
- c: salpetersaures Konzentrat
mit den Konzentrationsstufen
C_{o,2} bis zu 0,2 Masse-%
C_{o,4} bis zu 0,45 Masse-%
C₂ mehr als 2 Masse-%
- D: Hydroxylammoniumsulfat

Die Erfindung soll an folgendem Beispiel beschrieben werden, ohne darauf beschränkt zu sein:

### Beispiel

Für die Verwirklichung des erfindungsgemäßen Verfahrens wird das im Mischer 1 aufbereitete Reaktionsgemisch von Ammoniak, Sauerstoff und Wasserdampf in den Reaktor 2 geleitet, wo Ammoniak mit Sauerstoff zu Stickstoffmonoxid bei einem Verhältnis Ammoniak zu Sauerstoff von 8 bis 10 % über dem stöchiometrischen Verhältnis, d. h. (1,35 bis 1,37): 1,0 oxydiert wird, um eine maximale Entstehung von Stickstoffmonoxid zu erreichen. Das entstandene Nitrosegas wird im Kessel des Reaktors 2 auf eine Temperatur von 260 bis 280 °C abgekühlt, im Mischer 3 mit Wasserstoff gemischt und in den Reaktor 4 zur Stabilisierung der Zusammensetzung geleitet. Hier wird auf einem Silber-Mangan-Katalysator überschüssiger Sauerstoff zu Wasser hydriert. Der Sauerstoffhydriergrad erreicht 90 %. Die Reaktionswärme der Ammoniakoxydation und Sauerstoffhydrierung wird zur Dampfherstellung verwendet.

Das sauerstofffreie Nitrosegas mit einer Temperatur von ca. 150°C wird in den Kondensator 5 der ersten Stufe zugeführt, wo 70 bis 80 Masse-% Kondensat mit einem Salpetersäuregehalt von bis zu 0,2 Masse-% bei einer Temperatur von 93 bis 95 °C ausgeschieden werden, und danach in den Kondensator 6 der zweiten Stufe, wo 20 bis 30 Masse-% Kondensat mit einem Salpetersäuregehalt von mehr als 2 Masse-% ausgeschieden werden.

Das Kondensat der ersten Stufe mit einem Salpetersäuregehalt von bis zu 0,2 Masse-% wird durch den Kühler 7 in den Mischer 12 zur Herstellung einer wäßrigen 19%igen Schwefelsäurelösung abgeleitet, die zur Hydroxylammoniumsulfat-Synthese benötigt wird.

Das konzentrierte Stickstoffmonoxid wird aus dem Kondensator 6 durch den Verdichter 8 in den Absorber 9 abgeleitet, der mit salpetersaurem Kondensat der zweiten Stufe benetzt wird, wo es von der restlichen Stickstoffdioxidmenge befreit wird, und anschließend in den Mischer 10 zur Mischung mit Wasserstoff überführt wird. Das entstandene Gemisch wird in die Reaktorenkaskade 13 geleitet, wo das Hydroxylammoniumsulfat im schwefelsaurem Medium der im Mischer 12 erzeugten verdünnten Schwefelsäure synthetisiert wird.

Das Kondensat der zweiten Stufe wird nach dem Absorber 9 in den Reaktor 11 geleitet, wo die Salpetersäure bei einer Temperatur von 85 bis 90 °C mit Wassserstoff an dem Platinkatalysator, bestehend aus Platin (0,297 Masse-%), Platinsulfid (0,138 Masse-%) und Platinoxid (0,065 Masse-%) auf Graphitträger (RU 2039006) hydriert wird. Der Wasserstoff wird in den Reaktor 11 in so einer Menge zugegeben, daß die Zusammensetzung des Gasgemisches an seinem Ausgang der Zusammensetzung des aus dem Mischer 10 zur Stufe der Hydroxylammoniumsulfat-Synthese geleiteten Gemisches entspricht. Das Gasgemisch - reines Stickstoffmonoxid und Wasserstoffwird mit dem Hauptstrom des Gemisches aus Stickstoffmonoxid und Wasserstoff gemischt und zur Stufe der Hydroxylammoniumsulfat-Synthese geleitet.

Das aus dem Reaktor 11 austretende restliche Hydrierprodukt, dessen Salpetersäuregehalt bis zu 0,45 Masse-% beträgt, wird zur Herstellung einer wäßrigen Schwefelsäurelösung im Mischer 12 verwendet.

## Patentansprüche

1. Verfahren zur Herstellung von Hydroxylammoniumsulfat durch
- Aufbereitung des Reaktionsgemisches aus Ammoniak, Sauerstoff und Wasserdampf,
- katalytische Ammoniakoxidation,
- Mischung der erzeugten Nitrosegase mit Wasserstoff,
- Stabilisieren der Zusammensetzung der Nitrosegase durch Hydrieren,
- zweistufige Konzentrierung durch Wasserdampfkondensation,
- Reinigung der Nitrosegase aus der zweiten Stufe durch Kondensation von Stickstoffdioxid in Wasser zu verdünnter Salpetersäure,
- Mischung dieser gereinigten Nitrosegase mit Wasserstoff,
- Mischung mit dem Gemisch aus Schwefelsäure, Wasser und dem salpetersauren Kondensat der ersten Stufe der NO-Konzentrierung und
- die eigentliche Synthese des Hydroxylammoniumsulfats
**dadurch gekennzeichnet, daß**
- das aus der Reinigung der zweiten Stufe der Konzentrierung ausgeschiedene Kondensat, dessen Salpetersäureanteil mehr als 2 Masse-% beträgt,
- der Flüssigphasenhydrierung mit Wasserstoff in einem Reaktor mit PlatinKatalysator unterzogen und
- dieses Gemisch aus Nitrosegasen und Wasserstoff mit dem Hauptstrom der Mischung der gereinigten Nitrosegase mit Wasserstoff vereinigt wird.

2. Verfahren zur Herstellung von Hydroxylammoniumsulfat nach Anspruch 1, **dadurch gekennzeichnet, daß** das Hydrierprodukt der Flüssigphasenhydrierung, dessen Salpetersäureanteil bis zu 0,45 Masse-% beträgt, bei der Mischung des salpetersauren Kondensats der ersten Stufe mit Schwefelsäure und Wasser mit verwendet wird.

## Claims

1. Process for the preparation of hydroxylammonium sulphate by:-
- preparing the reaction mixture made up of ammonia, oxygen and steam;
- catalytic ammonia oxidation;
- mixing the created nitrous fumes with hydrogen gas;
- stabilizing the nitrous fumes' composition by hydrogenating;
- two-stage concentration process by steam condensation;
- purifying the nitrous fumes from the second process stage by condensation of nitrogen dioxide in water to dilute nitric acid;
- mixing these purified nitrous fumes by hydrogen gas;
- mixing with the mixture made up of sulphuric acid, water and nitric acid condensate from the first NO concentration stage; and
- the actual synthesis of hydroxylammonium sulphate;
**characterized in that**:-
- the condensate separated from the purification step of the second concentration stage, the nitric acid content of which is more than 2 per cent by weight,
- is subjected to the liquid-phase hydrogenation step in a reactor where hydrogen gas and a platinum catalyst are present, and
- that said mixture made up of nitrous fumes and hydrogen gas is combined with the mixture's main stream containing purified nitrous fumes and hydrogen gas.

2. Process for the preparation of hydroxylammonium sulphate according to claim 1, **characterized in that** the hydrogenated product from the liquid-phase hydrogenation process step, the nitric acid content of which is up to 0.45 per cent by weight, is used together with sulphuric acid and water for mixing the nitric acid condensate from the first process stage.

## Revendications

1. Procédé de production de sulfate d'hydroxylammonium par
- la préparation du mélange réactionnel d'ammoniac, d'oxygène et de vapeur d'eau,
- l'oxydation catalytique d'ammoniac,
- le mélange des gaz nitreux produits avec de l'hydrogène,
- la stabilisation de la composition des gaz nitreux par hydrogénation,
- la concentration biétagée par condensation de vapeur d'eau,
- la purification des gaz nitreux du deuxième étage par condensation de dioxyde d'azote dans l'eau en acide nitrique dilué,
- le mélange de ces gaz nitreux purifiés avec de l'hydrogène,
- le mélangeage avec le mélange obtenu par de l'acide sulfurique, de l'eau et l'acide nitrique condensé du premier étage de la concentration de NO et
- la synthèse proprement dite du sulfate d'hydroxylammonium **caractérisé par le fait que**
- la part en acide nitrique du condensat séparé lors de la purification du deuxième étage de la concentration comporte plus de 2 % en poids,
- que l'hydrogénation de la phase liquide est effectuée par l'hydrogène dans un réacteur à catalyseur au platine et
- que ce mélange de gaz nitreux et d'hydrogène est réuni au flux principal du mélange des gaz nitreux purifiés et d'hydrogène.

2. Procédé de production de sulfate d'hydroxylammonium selon la revendication 1, **caractérisé par le fait que** le produit hydrogéné de l'hydrogénation de la phase liquide, dont la part en acide nitrique comprend jusqu'à 0,45 % en poids, est utilisé lors du mélange de condensat d'acide nitrique du premier étage avec de l'acide sulfurique et de l'eau.
